# EUROPÄISCHE PATENTSCHRIFT

(11) **EP 3 614 891 B1**
(45) Veröffentlichungstag und Bekanntmachung des Hinweises auf die Patenterteilung: **27.09.2023**
(21) Anmeldenummer: 18719894.0
(22) Anmeldetag: 26.04.2018
(51) Int. Cl.: G06Q 20/32, G07F 9/00, G07F 13/06, A47J 31/52

(54) **VERFAHREN ZUR ÜBERMITTLUNG EINES DATENSATZES VON EINEM BEDIENGERÄT AN EINE GETRÄNKEZUBEREITUNGSMASCHINE**
METHOD FOR TRANSMITTING A DATA SET FROM AN OPERATOR TO A BEVERAGE PREPARATION MACHINE
PROCÉDÉ DE TRANSMISSION DE PAQUETS DE DONNÉES À PARTIR D'UN APPAREIL DE COMMANDE À UNE MACHINE DE PRÉPARATION DE BOISSONS

(30) Priorität: 27.04.2017 EP 17168414
(43) Veröffentlichungstag der Anmeldung: 04.03.2020
(73) Patentinhaber: Tchibo GmbH, 22297 Hamburg (DE)
(72) Erfinder: FRANKE, Dominik, 8306 Brüttisellen (CH)
(74) Vertreter: Frei Patent Attorneys
(86) Internationale Anmeldenummer: PCT/EP2018/060742
(87) Internationale Veröffentlichungsnummer: WO 2018/197617

(56) Entgegenhaltungen:
- WO-A1-2017/058794
- WO-A2-2009/032929
- CN-U- 205 162 787
- JP-A- 2014 170 283

## Beschreibung

Die Erfindung betrifft Getränkezubereitungsmaschinen zum Zubereiten von Getränken oder dergleichen. Gemäss Ausführungsformen geschieht die Zubereitung aus einer Portionspackung mit einer Portionsverpackung (bspw. Kapsel) und einem in der Portionsverpackung enthaltenen Extraktionsgut (bspw. Kaffee). Sie betrifft insbesondere ein Verfahren zur Übermittlung eines Datensatzes, beispielsweise eines User-Rezepts, von einem Bediengerät an eine Getränkezubereitungsmaschine, und entsprechende (Teil-) Verfahren zur Betrieb eines Bediengeräts, einer Getränkezubereitungsmaschine und eines Koordinationsservers.

Getränkezubereitungsmaschinen zum Zubereiten von Getränken oder dergleichen aus einem optional in einer Portionsverpackung vorhandenen Extraktionsgut sind beispielsweise als Kaffee- oder Espressomaschinen bekannt. In vielen entsprechenden Systemen sind die Portionsverpackungen als Kapsel ausgebildet, in denen das Extraktionsgut bspw. luftdicht abgeschlossen ist. Für die Extraktion wird die Kapsel in einer Kapselaufnahme platziert und angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul.

Neben einem Brühmodul können eine oder mehrere weitere Einheiten zum Fördern und Beifügen einer weiteren Getränkekomponente wie beispielsweise Milch vorliegen. So kann die Getränkezubereitungsmaschine ein Getränk oder allgemein gesprochen ein Gesamtprodukt aus zwei Teilprodukten herstellen.

Die europäische Patentanmeldung Nr. 15 194 735 beschreibt ein Verfahren zum Betrieb einer Getränkezubereitungsmaschine zum Herstellen eines Produktes aus mehreren Teilprodukten, wobei Mengenanteile der Teilprodukte durch einen Benutzer auf einer grafischen Anzeige der Mengenanteile angepasst werden können.

Die europäische Patentanmeldung Nr. 15 194 667 beschreibt ein Verfahren zum Betrieb einer Getränkezubereitungsmaschine unter Verwendung von Zubereitungsparametern, die anhand eines Portionencodes einer Portionspackung bestimmt werden. Dabei sind einzelne Zubereitungsparameter durch einen Benutzer anpassbar.

In den oben genannten Patentanmeldungen ist unter anderem die Option einer Kommunikation der Getränkezubereitungsmaschine mit einem Bediengerät beschrieben, welches mobil und tragbar sein kann, beispielsweise ein Mobiltelefon oder Smartphone. Mit dem Bediengerät können **User-Rezepte** an die Getränkezubereitungsmaschine übermittelt werden, oder Zubereitungsvorschriften, welche in der Getränkezubereitungsmaschine gespeichert sind, können modifiziert werden. Ein User-Rezept ist eine Menge von anpassbaren Zubereitungsparametern, welche eine Zubereitungsvorschrift definieren oder modifizieren. Es ist vorgesehen, dass die Zubereitung durch einen Bedienschritt ausgelöst wird, der durch den Benutzer an der Getränkezubereitungsmaschine selber ausgeführt wird.

Bei der Übertragung von Datensätzen allgemein und insbesondere von User-Rezepten soll gesichert sein, dass der Benutzer respektive das Bediengerät autorisiert sind, eine Übertragung durchzuführen. Dies kann beispielsweise geschehen, indem vorgängig ein Code zwischen Getränkezubereitungsmaschine und Bediengerät ausgetauscht wird, oder indem diese in einem gemeinsamen Funknetz (WLAN) eingebunden sind. Jedoch ist dazu erforderlich, dass beispielsweise ein "pairing"-Verfahren durchgeführt wird oder dass dem Benutzer ein Passwort zur Verbindung mit dem Funknetz mitgeteilt wird. Dies kann unvorteilhaft oder unerwünscht sein.

Die Schrift WO2017/058794 betrifft die Authentifizierung eines Mobilgerätes zur Bedienung eines Getränkedispensers unter Einbezug eines Servers. Dabei sendet der Getränkedispenser drahtlos als broadcast seine Geräte-ID, wobei diese nur im Nahbereich empfangbar sein soll. Alternativ kann ein Barcode mit der Geräte-ID vorliegen. Die Geräte-ID wird im Mobilgerät durch eine App empfangen, wenn das Mobilgerät in die Nähe des Getränkedispensers gebracht wird, und alternativ kann der Barcode vom Mobilgerät eingescannt werden. Damit kann ein Pairing zwischen Mobilgerät und Getränkedispenser durchgeführt werden. Eine User-ID und die Geräte-ID werden durch das Mobilgerät an den Server übermittelt.

Aus CN205162787 ist eine Getränkemaschine bekannt, verfügend über ein Modul für drahtlose Kommunikation mit externen Geräten und einem Server.

JP2014170283 beschreibt eine automatisierte Verkaufsmaschine, die Serverzugriff ermöglicht und mit einem Smartphone verbunden werden kann.

WO2009032929 offenbart Möglichkeiten, Interaktionen zwischen Nutzer und Ausgabevorrichtung zu vereinfachen. Die Ausgabevorrichtung weist einen Leser zum Lesen maschinenlesbarer Elemente auf.

Es ist eine mögliche Aufgabe der Erfindung, eine für einen Benutzer bequeme Bedienung der Getränkezubereitungsmaschine zu realisieren, insbesondere was die Übertragung eines Datensatzes, insbesondere eines User-Rezepts, an die Getränkezubereitungsmaschine betrifft, und ein entsprechendes Verfahren zur Übermittlung eines Datensatzes, insbesondere eines User-Rezepts, von einem Bediengerät an eine Getränkezubereitungsmaschine, und entsprechende (Teil-) Verfahren zur Betrieb eines Bediengeräts, einer Getränkezubereitungsmaschine und eines Koordinationsservers zu schaffen, welche diese Realisierung ermöglichen.

Es ist eine weitere mögliche Aufgabe der Erfindung, einem Benutzer die Bedienung einer Getränkezubereitungsmaschine zu erleichtern.

Es ist eine weitere mögliche Aufgabe der Erfindung, eine alternative Möglichkeit zum Übertragen von eines Datensatzes, insbesondere eines User-Rezepts, von einem Bediengerät an eine Getränkezubereitungsmaschine zu schaffen.

Diese Aufgabe lösen ein Verfahren zur Übermittlung eines Datensatzes von einem Bediengerät an eine Getränkezubereitungsmaschine, und entsprechende (Teil-) Verfahren zur Betrieb eines Bediengeräts, einer Getränkezubereitungsmaschine und eines Koordinationsservers, sowie ein Computerprogramm und eine Getränkezubereitungsmaschine gemäss den Patentansprüchen.

Das Verfahren zur Übermittlung eines Datensatzes von einem Bediengerät an eine Getränkezubereitungsmaschine, , weist also mindestens die folgenden Schritte auf:
- durch das **Bediengerät:** Erfassen einer Eingabe oder einer Auswahl, welche den Datensatz spezifiziert;
- durch das **Bediengerät:** Erfassen einer Wahl einer Betriebsart zum indirekten Senden des Datensatzes an eine Getränkezubereitungsmaschine, insbesondere als Auswahl unter mehreren Betriebsarten durch einen Benutzer des Bediengerätes;
- durch die **Getränkezubereitungsmaschine:** Erfassen eines durch den Benutzer ausgelösten Steuerbefehls;
- durch die **Getränkezubereitungsmaschine,** ausgelöst durch den Steuerbefehl: Übermittlung einer Maschinenadresse der Getränkezubereitungsmaschine an das Bediengerät;
- durch das **Bediengerät:** Empfang der Maschinenadresse;
- durch das **Bediengerät:** Übermittlung des Datensatzes und der Maschinenadresse an einen Koordinationsserver;
- durch den **Koordinationsserver:** Empfangen der Maschinenadresse und des Datensatzes;
- durch den **Koordinationsserver:** Speichern der Maschinenadresse und, dieser zugeordnet, des Datensatzes;
- durch den **Koordinationsserver:** Übermittlung dieses Datensatzes an die Getränkezubereitungsmaschine, insbesondere unter Verwendung der Maschinenadresse;
- durch die **Getränkezubereitungsmaschine:** Empfang des Datensatzes vom Koordinationsserver;
- durch die **Getränkezubereitungsmaschine:** Speichern des Datensatzes und/oder Ausführen einer Aktion nach Massgabe des Datensatzes.

Damit ist es möglich, einen Datensatz an eine beliebige, "fremde" Getränkezubereitungsmaschine zu übermitteln. Dies ist beispielsweise eine solche, bei welcher das Bediengerät nicht registriert ist, oder welche umgekehrt nicht im Bediengerät registriert ist. Es ist keine direkte Übermittlung des Datensatzes über eine direkte Kommunikationsverbindung zwischen Bediengerät und Getränkezubereitungsmaschine erforderlich. Es muss also auch keine solche direkte Kommunikationsverbindung eingerichtet werden.

In Ausführungsformen definiert der Datensatz ein User-Rezept. Dabei weist ein User-Rezept eine Menge von anpassbaren Zubereitungsparametern auf, welche eine Zubereitungsvorschrift zur Herstellung eines Gesamtproduktes durch die Getränkezubereitungsmaschine definieren oder modifizieren.

In Ausführungsformen ist die von der Getränkezubereitungsmaschine ausgeführte Aktion das Herstellen eines Gesamtproduktes gemäss dem User-Rezept.

In Ausführungsformen geschieht das Herstellen des Gesamtproduktes unter Verwendung einer Portionspackung.

In Ausführungsformen werden zur Übermittlung des Datensatzes durch den **Koordinationsserver** an die Getränkezubereitungsmaschine die folgenden Schritte ausgeführt:
- durch die **Getränkezubereitungsmaschine:** Meldung an den Koordinationsserver, unter Übermittlung der Maschinenadresse an den Koordinationsserver, dass die Getränkezubereitungsmaschine zum Empfang eines Datensatzes bereit ist;
- durch den **Koordinationsserver:** Empfangen der Meldung;
- durch den **Koordinationsserver:** falls oder sobald im Koordinationsserver ein der Maschinenadresse zugeordneter Datensatz gespeichert ist, Übermittlung dieses Datensatzes an die Getränkezubereitungsmaschine.

Die Übermittlung des Datensatzes an die Getränkezubereitungsmaschine kann sofort geschehen, wenn zum Zeitpunkt des Empfangs der Meldung der Datensatz bereits im Koordinationsserver gespeichert ist. Andernfalls kann der Koordinationsserver abwarten, bis der Datensatz vom Bediengerät erhalten worden ist, und diesen dann an die Getränkezubereitungsmaschine übermitteln, ohne dass diese zwingend eine neue Meldung oder Anfrage senden muss.

Die Übermittlung des Datensatzes an die Getränkezubereitungsmaschine unter Verwendung der Maschinenadresse kann geschehen, indem die Maschinenadresse die ihr zugeordnete Getränkezubereitungsmaschine identifiziert und die Übermittlung an die derart identifizierte Getränkezubereitungsmaschine stattfindet.

Die Meldung der Empfangsbereitschaft durch die Getränkezubereitungsmaschine kann auch als Abfrage an den Koordinationsserver, ob darin ein der Maschinenadresse zugeordneter Datensatz gespeichert ist, betrachtet werden. Typischerweise wird mit der Meldung der Empfangsbereitschaft eine Netzwerkadresse übermittelt.

Die Getränkezubereitungsmaschine führt gemäss diesen Ausführungsformen also selber und aktiv die Meldung an den Koordinationsserver durch. Es ist gemäss diesen Ausführungsformen nie so, dass Informationen aktiv, also ohne Meldung oder Abfrage oder Aufforderung oder Auslösung durch die Getränkezubereitungsmaschine, an die Getränkezubereitungsmaschine geschickt werden. Damit ist die Getränkezubereitungsmaschine besser vor Angriffen geschützt.

In anderen Ausführungsformen wird der Datensatz ("aktiv") vom Koordinationsserver an die Getränkezubereitungsmaschine übertragen, ohne dass diese eine Meldung oder Abfrage durchführt oder den Koordinationsserver kontaktiert. Beispielsweise geschieht dies nachdem die Maschinenadresse und der Datensatz durch den Koordinationsserver empfangen wurden. Um den Datensatz in dieser Weise an die Getränkezubereitungsmaschine senden zu können, kann im Koordinationsserver, der Maschinenadresse zugeordnet, eine Netzwerk-Adresse, mittels welcher der Getränkezubereitungsmaschine Informationen übermittelt werden können, gespeichert sein. Diese Netzwerk-Adresse kann beispielsweise eine IP-Adresse oder eine E-Mail-Adresse sein. Eine solche Netzwerkadresse kann auch zusammen mit der Maschinenadresse von der Getränkezubereitungsmaschine an das Bediengerät übermittelt werden, und dann von dem Bediengerät an den Koordinationsserver übermittelt werden. Zur Übermittlung des Datensatzes durch den **Koordinationsserver** an die Getränkezubereitungsmaschine werden dann die folgenden Schritte ausgeführt:
- durch den **Koordinationsserver:** Ermitteln der Netzwerk-Adresse, welche der empfangenen Maschinenadresse zugeordnet ist;
- durch den **Koordinationsserver:** Übermittlung des Datensatzes an diese Netzwerk-Adresse.

Die Übermittlung des Datensatzes kann erst nach einem vorgegebenen Zeitintervall - beispielsweise wenige Sekunden - nach Empfang des Datensatzes durch den Koordinationsserver initiiert werden und ggf. wiederholt werden.

Die Getränkezubereitungsmaschine weist typischerweise eine zur drahtlosen Kommunikation ausgebildete Kommunikationseinheit auf, mittels welcher die Getränkezubereitungsmaschine mit dem Koordinationsserver kommunizieren kann.

Die Maschinenadresse erlaubt eine eindeutige Identifikation der Maschine. Beispielsweise ist sie eine Seriennummer, ein Gerätename, eine E-Mail-Adresse, eine (statische) Netzwerk-Adresse (z.B. IP-Adresse) oder eine Hardware-Adresse (z.B. MAC-Adresse).

Der Schritt des Speicherns des Datensatzes und/oder Ausführens einer Aktion nach Massgabe des Datensatzes - beispielsweise das Herstellen eines Gesamtproduktes entsprechend dem User-Rezept - weist typischerweise einen Bestätigungsschritt auf, in welchem der Benutzer eine Bestätigungshandlung an der Getränkezubereitungsmaschine vornehmen muss, beispielsweise durch Drücken einer Taste. Dadurch kann verhindert werden, dass eine Aktion respektive eine Zubereitung erfolgt, ohne dass beispielsweise ein Behälter zur Aufnahme des Gesamtproduktes vorliegt.

In Ausführungsformen weist das Verfahren den Schritt auf:
- durch das **Bediengerät:** Anzeige einer Benutzeranweisung, welche den Benutzer zur Eingabe eines Steuerbefehls an der Getränkezubereitungsmaschine auffordert.

Damit ist es möglich, die Weiterführung des Verfahrens auf der Getränkezubereitungsmaschine auszulösen, ohne dass das Bediengerät selber direkt mit der Getränkezubereitungsmaschine kommuniziert. Die Eingabe des Steuerbefehls kann beispielsweise durch das zweimalige Betätigen einer Bedientaste der Getränkezubereitungsmaschine erfolgen.

In Ausführungsformen geschieht die Eingabe des Steuerbefehls durch eine Interaktion des Benutzers direkt mit der Getränkezubereitungsmaschine, also ohne Verwendung des Bediengerätes.

In Ausführungsformen übermittelt die Getränkezubereitungsmaschine die Maschinenadresse nicht, wenn sie nicht einen entsprechenden Steuerbefehl erfasst, der vom Benutzer selber an der Getränkezubereitungsmaschine ausgelöst wurde, insbesondere durch eine Interaktion des Benutzers direkt mit der Getränkezubereitungsmaschine, also ohne Verwendung des Bediengerätes.

In Ausführungsformen geschieht die Übermittlung der Maschinenadresse der Getränkezubereitungsmaschine an das Bediengerät über eine nur im Nahbereich wirkende Kommunikation. Damit ist es möglich, einen Einfluss von anderen Geräten praktisch auszuschliessen. Diese Kommunikation läuft über einen direkten Kanal zwischen Getränkezubereitungsmaschine und Bediengerät.

In Ausführungsformen geschieht die Übermittlung der Maschinenadresse der Getränkezubereitungsmaschine an das Bediengerät mittels einer monodirektionalen Übermittlung.

In Ausführungsformen geschieht die Übermittlung der Maschinenadresse der Getränkezubereitungsmaschine an das Bediengerät über einen optischen Kommunikationskanal. Damit ist es möglich, bestehende Elemente einer Bedieneinheit der Getränkezubereitungsmaschine einzusetzen.

In Ausführungsformen geschieht diese Übermittlung über einen akustischen Kommunikationskanal oder eine Funkverbindung, insbesondere über eine im Nahbereich wirksame Funkverbindung, beispielsweise NFC, Bluetooth.

In Ausführungsformen weist die Kommunikation über den optischen Kommunikationskanal die Schritte auf:
- durch die **Getränkezubereitungsmaschine:** Darstellen einer Zeichenkette auf einer Anzeige der Getränkezubereitungsmaschine und Erfassen einer manuellen Eingabe dieses Codes am Bediengerät.

Damit ist es möglich, eine Übermittlung ohne besondere Scansoftware auf dem Bediengerät zu realisieren.

In Ausführungsformen weist die Kommunikation über den optischen Kommunikationskanal die Schritte auf:
- durch die **Getränkezubereitungsmaschine:** Senden eines optischen Codes;
- durch das **Bediengerät:** optisches Erfassen und Decodieren dieses optischen Codes;
wobei insbesondere der optische Code durch eine räumliche oder zeitliche Variation von abgestrahltem Licht dargestellt wird. Damit ist es möglich, bekannte optische Codes zu verwenden, zu deren Erkennung Standardsoftware verwendet werden kann.

Der optische Code kann die übermittelte Information in Form von räumlichen und/oder zeitlichen Variationen einer Anzeige auf der Ausgabeeinheit codieren. Eine räumliche Variation respektive Codierung geschieht beispielsweise durch Anzeige eines eindimensionalen oder zweidimensionalen Barcodes ("QR-Code"). Eine zeitliche Variation geschieht beispielsweise durch Ändern der Helligkeit von Teilen einer Anzeige oder der ganzen Anzeige oder durch Modulieren der Lichtabstrahlung einer Leuchtdiode oder einer anderen Lichtquelle, typischerweise im sichtbaren oder Infrarot-Bereich.

In anderen Ausführungsformen geschieht die Übermittlung der Maschinenadresse an das Bediengerät gemäss einem Nahbereich-Funkprotokoll. Insbesondere kann dieses nur monodirektional betrieben werden. Das Nahbereich-Funkprotokoll kann beispielsweise Bluetooth, NFC oder ein anderes Protokoll sein.

Ein monodirektionaler Betrieb oder eine monodirektionale Übermittlung bedeutet, dass ein Kommunikationspartner (hier die Getränkezubereitungsmaschine) nur sendet und der andere (hier das Bediengerät) nur empfängt. Dies gilt für optische wie auch funkbasierte Kommunikation.

In Ausführungsformen weist das Verfahren, nach dem Empfang des Datensatzes, als weiteren Schritt auf:
- durch die **Getränkezubereitungsmaschine:** Anzeige des Datensatzes.

Damit ist es möglich, dass der Benutzer vor dem Auslösen der Herstellung sein übermitteltes Rezept kontrolliert.

In Ausführungsformen weist das Verfahren als weiteren Schritt auf:
- durch den **Koordinationsserver:** Nach Ablauf eines Zeitintervalls ("Speicher-Zeitintervall") nach dem Speichern des Datensatzes, Löschen des gespeicherten Datensatzes und seiner Zuordnung zur Maschinenadresse.

Damit wird verhindert, dass nicht mehr verwendete Datensätze Speicherplatz verbrauchen.

Der Datensatz kann im Koordinationsserver auch gelöscht werden, nachdem es an die Getränkezubereitungsmaschine übermittelt wurde. Wenn eine vorgegebene Anzahl von Datensätzen zu einer Maschinenadresse überschritten wird, kann der älteste Datensatz gelöscht werden.

In Ausführungsformen weist das Verfahren als weitere Schritte auf:
- durch das **Bediengerät:** Empfang eines Gerätenamens, welcher die Getränkezubereitungsmaschine identifiziert, wobei insbesondere
   ∘ entweder der Gerätename dem Bediengerät von der Getränkezubereitungsmaschine übermittelt wird, insbesondere zusammen mit der Übermittlung der Maschinenadresse an das Bediengerät,
   o oder der Gerätename dem Bediengerät vom Koordinationsserver übermittelt wird, insbesondere nach Empfang der Maschinenadresse vom Bediengerät;
- durch das **Bediengerät:** Anzeige des Gerätenamens zur Auswahl durch den Benutzer, vor dem späteren Senden eines weiteren Datensatzes zum erneuten Herstellen eines Gesamtproduktes.

Damit ist es möglich, nachdem die Maschinenadresse einmal übermittelt worden ist, die Getränkezubereitungsmaschine anhand des Gerätenamens auf dem Bediengerät auszuwählen, und den Datensatz zu übermitteln, ohne dass die Maschinenadresse noch einmal dem Bediengerät übermittelt werden muss.

In Ausführungsformen weist das Verfahren als weitere Schritte auf:
- durch das **Bediengerät:** Übermitteln, zusammen mit dem Datensatz und der Maschinenadresse, eines **Bediengerätidentifikators** an den Koordinationsserver;
- durch den **Koordinationsserver:** Speichern des Bediengerätidentifikators unter Zuordnung zur Maschinenadresse.

Damit ist es möglich, Datensätze, die von verschiedenen Bediengeräten stammen, voneinander zu unterscheiden und gegebenenfalls zu priorisieren.

Das Bediengerät weist eine Eingabevorrichtung und eine Ausgabevorrichtung auf, die als Touchscreen kombiniert sein können, sowie eine Datenverarbeitungseinheit. Es kann eine Kommunikationseinheit zur Kommunikation mit der Getränkezubereitungsmaschine aufweisen, welche aber gemäss der vorliegenden Erfindung nicht zwingend zur bidirektionalen Kommunikation mit dem Getränkezubereitungsmaschine verwendet wird, und insbesondere nicht zur direkten Übertragung eines Datensatzes an die Getränkezubereitungsmaschine. Das Bediengerät kann ein **mobiles, insbesondere ein tragbares** Gerät sein, beispielsweise ein Mobiltelefon oder Smartphone, oder ein funktional gleichwertiges Gerät wie eine Smartwatch oder ein "wearable computer".

Das Verfahren zum Betrieb eines Bediengerätes dient - in Interaktion mit der Getränkezubereitungsmaschine und dem Koordinationsserver - zur Übermittlung eines Datensatzes vom Bediengerät an die Getränkezubereitungsmaschine. Das Verfahren weist mindestens die folgenden auf dem Bediengerät ausgeführten Schritte auf:
- Erfassen einer Eingabe oder einer Auswahl, welche den Datensatz spezifiziert;
- Erfassen einer Wahl einer Betriebsart zum indirekten Senden des Datensatzes an eine Getränkezubereitungsmaschine;
- Empfang einer Maschinenadresse;
- Übermittlung des Datensatzes und der Maschinenadresse an einen Koordinationsserver.

Das **Computerprogramm** zum Betrieb eines Bediengerätes dient - in Interaktion mit der Getränkezubereitungsmaschine und dem Koordinationsserver - zur Übermittlung eines Datensatzes vom Bediengerät an eine Getränkezubereitungsmaschine. Das Computerprogramm führt bei Ausführung auf dem Bediengerät das Verfahren gemäss den oben im Verfahren zum Betrieb des Bediengerätes beschriebenen Schritten aus.

Das **Computerprogramm** zur Ausführung auf dem Bediengerät ist in einen internen Speicher einer digitalen Datenverarbeitungseinheit des Bediengerätes ladbar und weist Computerprogrammcodemittel auf, welche, wenn sie in der digitalen Datenverarbeitungseinheit des Bediengerätes ausgeführt werden, diese zur Ausführung der für das Bediengerät vorgesehenen Schritte des oben beschriebenen Verfahrens bringen. Ein Computerprogrammprodukt weist einen Datenträger, respektive ein computerlesbares Medium auf, auf welchem die Computerprogrammcodemittel gespeichert sind.

Das Verfahren zum Betrieb einer Getränkezubereitungsmaschine dient - in Interaktion mit dem Bediengerät und dem Koordinationsserver - zur Übermittlung eines Datensatzes vom Bediengerät an die Getränkezubereitungsmaschine. Das Verfahren weist mindestens die folgenden auf der Getränkezubereitungsmaschine ausgeführten Schritte auf:
- Erfassen eines durch einen Benutzer ausgelösten Steuerbefehls;
- ausgelöst durch den Steuerbefehl: Übermittlung einer Maschinenadresse der Getränkezubereitungsmaschine an das Bediengerät;
- Optional: Meldung an einen Koordinationsserver, unter Übermittlung der Maschinenadresse an den Koordinationsserver, dass die Getränkezubereitungsmaschine zum Empfang eines Datensatzes bereit ist;
- Empfang eines Datensatzes vom Koordinationsserver;
- Speichern des Datensatzes und/oder Ausführen einer Aktion nach Massgabe des Datensatzes.

Die **Getränkezubereitungsmaschine** ist ausgebildet zur Ausführung des oben beschriebenen Verfahrens.

Das Verfahren zum Betrieb eines Koordinationsservers dient - in Interaktion mit dem Bediengerät und der Getränkezubereitungsmaschine - zur Übermittlung eines Datensatzes vom Bediengerät an die Getränkezubereitungsmaschine. Das Verfahren weist mindestens die folgenden auf dem Koordinationsserver ausgeführten Schritte auf:
- durch den **Koordinationsserver:** Empfangen einer Maschinenadresse einer Getränkezubereitungsmaschine und eines Datensatzes;
- durch den **Koordinationsserver:** Speichern der Maschinenadresse und, dieser zugeordnet, des Datensatzes;
- durch den **Koordinationsserver:** Übermittlung dieses Datensatzes an eine Getränkezubereitungsmaschine entsprechend der Maschinenadresse.

In Ausführungsformen werden zur Übermittlung des Datensatzes durch den **Koordinationsserver** an die Getränkezubereitungsmaschine die folgenden Schritte ausgeführt
- durch den **Koordinationsserver:** Empfangen einer Meldung, unter Angabe einer Maschinenadresse, dass eine Getränkezubereitungsmaschine zum Empfang eines Datensatzes bereit ist;
- durch den **Koordinationsserver:** falls im Koordinationsserver ein der Maschinenadresse zugeordneter Datensatz gespeichert ist, Übermittlung dieses Datensatzes an einen Absender der Meldung.

Weitere bevorzugte Ausführungsformen gehen aus den abhängigen Patentansprüchen hervor. Dabei sind Merkmale der Verfahrensansprüche sinngemäss mit den Geräte- und Computerprogrammansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: ein System zur Getränkezubereitung;
- Figur 2: Ablaufdiagramm eines Verfahrens zur Übermittlung eines User-Rezepts.

Grundsätzlich sind in den Figuren gleiche Elemente mit gleichen Bezugszeichen versehen.

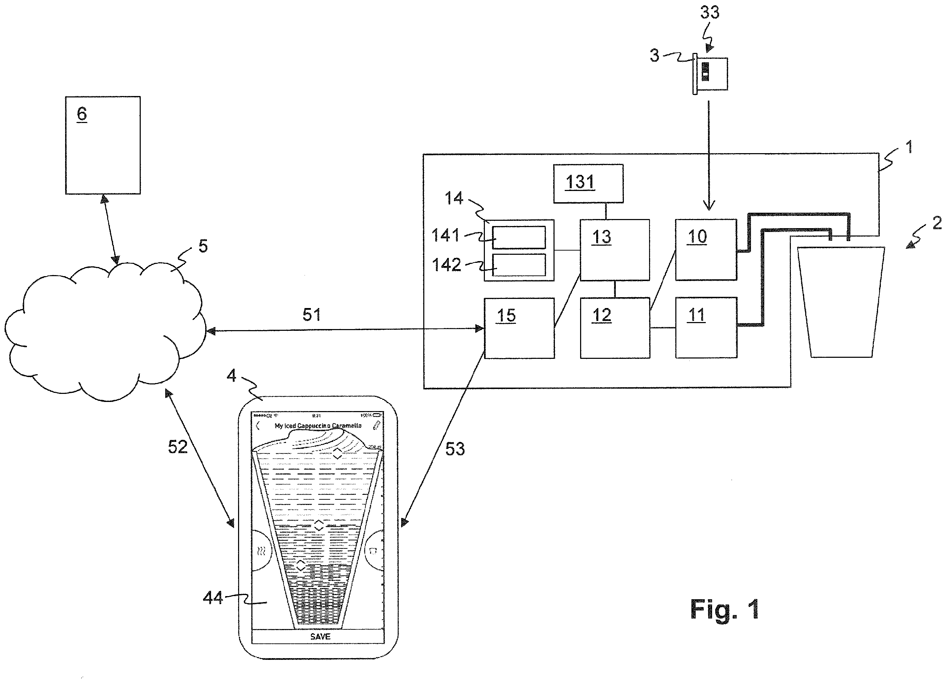

**Figur 1** zeigt ein **System** zur Getränkezubereitung mit einer Getränkezubereitungsmaschine 1 zum Befüllen eines Behälters 2 mit mindestens einem Extraktionsgut aus einer Portionspackung 3. Die Getränkezubereitungsmaschine 1 kann über eine erste Kommunikationsverbindung 51 mit einem Kommunikationsnetzwerk 5 wie einem Intranet oder dem Internet verbunden sein. Ein Bediengerät 4 welches mobil und tragbar sein kann, beispielsweise ein Mobiltelefon oder Smartphone, oder ein dediziertes Gerät welches nur zur Bedienung der Getränkezubereitungsmaschine 1 vorgesehen ist, kann indirekt über eine zweite Kommunikationsverbindung 52 und das Kommunikationsnetzwerk 5 oder optional auch direkt über einen direkten Kanal 53 mit der Getränkezubereitungsmaschine 1 kommunizieren, wobei eine direkte bidirektionale Verbindung gemäss der vorliegenden Erfindung nicht erforderlich ist.

Über das Kommunikationsnetzwerk 5 können die Getränkezubereitungsmaschine 1 und das Bediengerät 4 jeweils mit einem Koordinationsserver 6 kommunizieren.

Die Getränkezubereitungsmaschine 1 weist eine **Grundeinheit** 10 zum Extrahieren eines **Extraktionsprodukts** mittels einer Extraktionsflüssigkeit auf. Die Getränkezubereitungsmaschine 1 ist beispielsweise eine Portionskapsel-Kaffeemaschine der an sich bekannten Art, wobei die Grundeinheit 10 ein Brühmodul und die Extraktionsflüssigkeit heisses und unter Druck stehendes Wasser ist. Das Extraktionsprodukt wird dem Behälter 2 zugeführt.

Die **Portionspackung** 3 weist eine Portionsverpackung (bspw. Kapsel) und ein in der Portionsverpackung enthaltenes Extraktionsgut (bspw. Kaffee) auf. Die Portionspackung 3 kann mit einem maschinenlesbaren Portionencode 33 versehen sein.

Die Getränkezubereitungsmaschine 1 weist eine **Zusatzeinheit** 11 auf, welche mindestens ein weiteres **Produkt** oder **Teilprodukt** fördern oder erzeugen kann, beispielsweise Milch und/oder Milchschaum, welche ebenfalls dem Behälter 2 zugeführt werden.

Das Extraktionsprodukt und das mindestens eine Teilprodukt werden gleichzeitig oder sequentiell dem Behälter 2 zugeführt und bilden zusammen im Behälter 2 ein Gesamtprodukt, beispielsweise einen "Caffe Macchiato" bestehend aus Kaffee, kalter oder warmer Milch, und kaltem oder warmem Milchschaum.

Die Getränkezubereitungsmaschine 1 weist zur Steuerung der Grundeinheit 10 und der Zusatzeinheit 11, zur Bedienung durch einem Benutzer und zur optionalen Kommunikation mit anderen Geräten eine Steuereinheit 12, eine übergeordnete Steuereinheit 13, eine Bedieneinheit 14 und eine Kommunikationseinheit 15 auf.

Die **Steuereinheit** 12 ist zur Ansteuerung der Grundeinheit 10 und Zusatzeinheit 11 eingerichtet, beispielsweise indem sie die Pumpen Ventile, Heizelemente etc. dieser Einheiten ansteuert und Messwerte von Temperaturen, Drücken, Durchfluss etc. erfasst und verarbeitet.

Die **übergeordnete Steuereinheit** 13 ist zur Ansteuerung der Bedieneinheit 14 und er Kommunikationseinheit 15 eingerichtet. Die übergeordnete Steuereinheit 13 kann physikalisch und/oder programmtechnisch getrennt von der Steuereinheit 12 oder identisch mit der Steuereinheit 12 sein.

Die **Bedieneinheit** 14 weist eine Eingabeeinheit 141, mit beispielsweise Schaltern, Tastern und/oder einer Jog-Dial oder Einstellrad und/oder einer berührungsempfindlichen Fläche auf, sowie eine Ausgabeeinheit 142 mit optischen Anzeigemitteln wie Leuchten oder einem Bildschirm etc. und/oder akustischen Anzeigemitteln wie einem Lautsprecher, Summer, etc..

Die **Kommunikationseinheit** 15 ist zur Kommunikation über die erste Kommunikationsverbindung 51, die drahtlos (beispielsweise mittels Wi-Fi, Bluetooth, etc. ) oder drahtgebunden (beispielsweise mittels Ethernet, USB) sein kann, eingerichtet, insbesondere zur Kommunikation mit dem Kommunikationsnetzwerk 5.

Ein **Bediengerät** 4, typischerweise ein Mobiltelefon oder Smartphone, weist ein Benutzerinterface 44 auf, beispielsweise einen berührungsempfindlichen Bildschirm oder Touchscreen, welcher als Ein- und Ausgabeeinheit funktioniert. Zusätzlich oder alternativ können auch Taster des Bediengerätes 4 als Eingabeeinheiten dienen. Zusätzlich oder alternativ kann eine Spracheingabe realisiert sein.

Wo nicht anders erwähnt, können Informationen an den Benutzer und Eingaben des Benutzers über die Bedieneinheit 14 und/oder das Bediengerät 4 ausgegeben respektive eingegeben werden.

Die übergeordnete Steuereinheit 13 weist einen Speicher 131 auf, in welchem unter anderem **Zubereitungsvorschriften** oder Rezepte gespeichert sind. Eine Zubereitungsvorschrift weist mindestens **Steuerinformationen** auf, die in Befehle zur Steuerung der Grundeinheit 10 und der Zusatzeinheit 11 umgesetzt werden können. Solche Steuerinformationen weisen einerseits **Ablaufinformationen** auf, welche einen Ablauf von Schritten spezifizieren, die durch die Grundeinheit 10 und/oder die Zusatzeinheit 11 zum Erzeugen eines Gesamtprodukte auszuführen sind. Andererseits weisen die Steuerinformationen beispielsweise Temperaturen, Volumenangaben, Zeitangaben, absolute oder relative Mengenanteile, weitere Parameter von Teilprodukten, Reihenfolge der Zubereitung von Teilprodukten, Name eines Getränkes, Name des Benutzers, Zubereitungshinweise und - empfehlungen, Kapselpräferenz etc. auf - im Folgenden allgemein auch **Zubereitungsparameter** genannt - welche einen Ablauf parametrisieren.

Eine Zubereitungsvorschrift kann auch **Benutzeranweisungen** enthalten. Diese Anweisungen sind Teil der Zubereitung des Gesamtproduktes und müssen durch einen Benutzer ausgeführt werden. Dazu können die Benutzeranweisungen mittels der Ausgabeeinheit 142 oder des Benutzerinterface 44 des Bediengerätes 4 angezeigt werden. Beispielsweise sind solche Benutzeranweisungen "Jetzt Eiswürfel hinzufügen".

Es können auch Benutzeranweisungen angezeigt werden, die nicht Teil einer Zubereitungsvorschrift sind, sondern in anderer Weise die Bedienung der Getränkezubereitungsmaschine 1 und/oder des Bediengerätes 4 betreffen. Insbesondere kann eine Benutzeranweisung einen Benutzer auffordern, an der Getränkezubereitungsmaschine 1 die indirekte Übertragung eines User-Rezepts von einem beliebigen Bediengerät 4 auszulösen.

**Zur Zubereitung eines Produktes** werden entsprechend der Zubereitungsvorschrift Steuerinformationen respektive entsprechende Befehle durch die Grundeinheit 10 und Zusatzeinheit 11 umgesetzt und damit ein Zubereitungsablauf realisiert. Falls Zubereitungsvorschrift Benutzeranweisungen aufweist, werden diese an entsprechenden Stellen des Ablaufs dem Benutzer angezeigt.

Eine Zubereitungsvorschrift kann Zubereitungsparameter aufweisen, die durch den Benutzer angepasst werden dürfen, sowie Zubereitungsparameter, die nicht durch den Benutzer anpassbar sind. **Anpassbare Zubereitungsparameter** sind beispielsweise (Volumen)Anteile von Teilprodukten im Gesamtprodukt, eine Gesamtmenge, oder die Temperatur eines Teilproduktes. Für anpassbare Zubereitungsparameter kann die Zubereitungsvorschrift einen Standardwert oder Defaultwert enthalten, welcher verwendet wird, wenn der Benutzer den Parameter nicht anpasst.

Zur Anpassung von anpassbaren Zubereitungsparametern wird dem Benutzer auf dem Benutzerinterface 44 des Bediengerätes 4 eine Auswahl eines oder mehrere solcher Zubereitungsparameter angezeigt und wird eine Eingabe des Benutzers zur Anpassung des Zubereitungsparameters erfasst. Damit wird ein **User-Rezept** definiert, als eine Menge von anpassbaren Zubereitungsparametern, welche eine Zubereitungsvorschrift definieren oder eine gespeicherte Zubereitungsvorschrift ergänzen und/oder modifizieren.

Das Bediengerät 4 kann Informationen, welche die erfassten Benutzereingaben wie Mengenanteile, Wahl des Behälters oder Gesamtmenge, Temperaturwahl etc. repräsentieren,
- direkt über einen direkten Kanal 53, falls dieser dazu eingerichtet ist,
- oder indirekt über die zweite Kommunikationsverbindung 52 und die erste Kommunikationsverbindung 51
an die Getränkezubereitungsmaschine 1 übermitteln. Weiter unten wird beschrieben, wie die indirekte Übermittlung realisiert werden kann, so dass vermieden werden kann, eine Kommunikationsverbindung über den direkten Kanal 53 für die Übertragung von Informationen vom Bediengerät 4 an die Getränkezubereitungsmaschine 1 einzurichten.

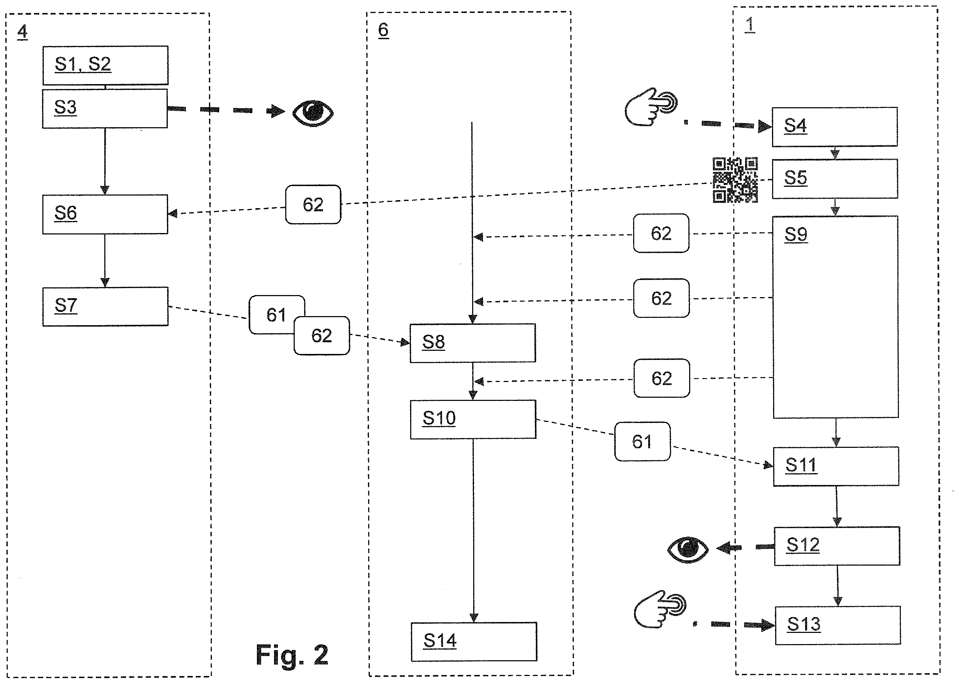

**Figur 2** zeigt ein Ablaufdiagramm eines Ablaufs eines Verfahrens zur Übermittlung eines Datensatzes, insbesondere eines User-Rezepts 61, von einem Bediengerät 4 an eine Getränkezubereitungsmaschine 1. Das Verfahren wird anhand der Übermittlung eines User-Rezepts 61 erläutert, ist aber auch allgemein für einen Datensatz anwendbar. Ein Datensatz kann beispielsweise auch Grundeinstellungen der Getränkezubereitungsmaschine 1 spezifizieren, oder andere Parameter, die nicht direkt die Herstellung eines Produktes beschreiben.

Das Verfahren weist die folgenden Schritte auf (jeweils mit S1, S2 etc. bezeichnet):
- S1: Durch einen Benutzer an einem **Bediengerät** 4: Eingabe oder Auswahl eines User-Rezepts 61.
- S2: Durch den Benutzer am **Bediengerät** 4: Wahl einer Betriebsart zum indirekten Senden des User-Rezepts 61 an eine Getränkezubereitungsmaschine 1. Dies geschieht insbesondere als Auswahl unter mehreren Betriebsarten. Solche andere Betriebsarten sind beispielsweise das direkte Übermitteln eines Rezeptes an eine (andere), oder eine Konfiguration einer (anderen), Getränkezubereitungsmaschine, welche zur direkten Kommunikation mit dem Bediengerät konfiguriert ist.
- S3, Optional: Durch das **Bediengerät** 4: Anzeige einer Benutzeranweisung.
- S4: Durch den Benutzer an der **Getränkezubereitungsmaschine** 1: Eingabe eines Steuerbefehls respektive Erfassen eines durch den Benutzer ausgelösten Steuerbefehls. Der Steuerbefehl kann dem Benutzer beispielsweise durch eine Bedienungsanleitung in gedruckter oder elektronischer Form bekannt gemacht werden, oder durch die optional am Bediengerät 4 angezeigte Benutzeranweisung.
- S5: Durch die **Getränkezubereitungsmaschine** 1, ausgelöst durch den Steuerbefehl, Übermittlung einer Maschinenadresse 62 an das Bediengerät 4. Dies kann über eine nur im Nahbereich wirkende Kommunikation geschehen, insbesondere über eine über eine Distanz von weniger als zwei Metern, weniger als einem Meter oder weniger als 50 cm wirkende Kommunikation. In Ausführungsformen ist diese Kommunikation monodirektional. Beispielsweise beinhaltet sie die Anzeige eines optischen Codes wie eines QR-Codes an einer Anzeige der Ausgabeeinheit 142 der Getränkezubereitungsmaschine 1 während eines Zeitintervalls ("Anzeige-Zeitintervall").
- S6: Durch das **Bediengerät** 4: Empfang der Maschinenadresse 62. Optional kann überprüft werden, ob die Maschinenadresse 62 eine gültige ist.
- S7: Durch das **Bediengerät** 4: Übermittlung des User-Rezepts 61 und der Maschinenadresse 62 an einen Koordinationsserver 6.
- S8: Durch den **Koordinationsserver** 6: Empfangen und Speichern der Maschinenadresse 62 und, dieser zugeordnet, des User-Rezepts 61. Falls mehr als ein vorgegebenes Maximum (beispielsweise fünf) an User-Rezepten 61 zu dieser Maschinenadresse 62 gespeichert sind, Löschen des ältesten User-Rezepts 61.
- S9: Durch die **Getränkezubereitungsmaschine** 1: Meldung an den Koordinationsserver 6, unter Übermittlung der Maschinenadresse 62 an den Koordinationsserver 6, dass die Getränkezubereitungsmaschine 1 zum Empfang eines User-Rezepts 61 bereit ist. Dies kann auch als Abfrage betrachtet werden, ob ein der Maschinenadresse 62 zugeordnetes User-Rezept 61 gespeichert ist. Wiederholung der Abfrage, wenn dies nicht der Fall ist. Ein Intervall zur Wiederholung beträgt beispielsweise zwei oder fünf oder zehn Sekunden oder eine halbe Minute oder mehr. Das gegebenenfalls wiederholte Abfragen beginnt beispielsweise bei der Übermittlung der Maschinenadresse 62 an das Bediengerät 4. Insbesondere wenn diese Übermittlung monodirektional ist und die Getränkezubereitungsmaschine 1 keine Empfangsbestätigung direkt vom Bediengerät 4 erhält, kann das gegebenenfalls wiederholte Abfragen nach Ablauf eines Zeitintervalls ("Abfrage-Zeitintervall") automatisch beendet werden. Das Abfrage-Zeitintervall ist typischerweise mindestens gleich lang oder etwas länger (beispielsweise zwei Minuten) als das Anzeige-Zeitintervall. Alternativ kann auf Wiederholung der Abfrage verzichtet werden. Dann ist der Koordinationsserver 6 dazu eingerichtet, das User-Rezept 61 automatisch an die Getränkezubereitungsmaschine 1 zu übermitteln, sobald es vorliegt, und ohne dass eine erneute Meldung respektive Abfrage der Getränkezubereitungsmaschine 1 abgewartet wird.
- S10: Wenn das User-Rezept 61 vorliegt, durch den **Koordinationsserver** 6: Übermittlung des User-Rezepts 61 an die Getränkezubereitungsmaschine 1.
- S11: Durch die **Getränkezubereitungsmaschine** 1: Empfang des User-Rezepts 61.
- S12, Optional: Durch die **Getränkezubereitungsmaschine** 1: Anzeige des empfangenen User-Rezepts 61.
- S13: Durch die **Getränkezubereitungsmaschine** 1: Ausführen einer Aktion, insbesondere Herstellen des Gesamtproduktes entsprechend des User-Rezepts 61. Das Herstellen kann optional eine Eingabe des Benutzers zur Auslösung oder Bestätigung verlangen.
- S14, Optional: Durch den **Koordinationsserver** 6: Nach Übermittlung des User-Rezepts 61 an die Getränkezubereitungsmaschine 1, oder, falls keine Übermittlung stattgefunden hat, nach Ablauf eines Zeitintervalls ("Speicher-Zeitintervall") nach dem Speichern des User-Rezepts 61: Löschen des gespeicherten User-Rezepts 61 und seiner Zuordnung zur Maschinenadresse 62. Das Zeitintervall beträgt beispielsweise fünf Minuten.

Falls mehrere User-Rezepte 61 mit derselben zugeordneten Maschinenadresse 62 an den Koordinationsserver 6 übermittelt werden, kann der Koordinationsserver 6 so eingerichtet sein, dass er nur die zuletzt übermittelte speichert. Alternativ kann der Koordinationsserver 6 mehrere User-Rezepte 61 speichern, und diese bei Abfrage durch die Getränkezubereitungsmaschine 1 an diese übermitteln. Darauf kann die Getränkezubereitungsmaschine 1 dem Nutzer die mehreren User-Rezepte 61 zur Auswahl anbieten.

In Ausführungsformen übermittelt das Bediengerät 4 zusammen mit dem User-Rezept 61 und der Maschinenadresse 62 auch einen **Bediengerätidentifikator** an den Koordinationsserver 6. Der Bediengerätidentifikator identifiziert das Bediengerät 4 eindeutig. Er ist beispielsweise ein alphanumerischer Code, der eineindeutig dem Bediengerät 4 zugeordnet ist. Er kann im Koordinationsserver 6 unter Zuordnung zur Maschinenadresse 62 gespeichert werden.

In Ausführungsformen wird dem Bediengerät 4 ein **Gerätename** übermittelt, welcher die Getränkezubereitungsmaschine 1 identifiziert. Dies geschieht beispielsweise zusammen mit der Übermittlung der Maschinenadresse 62 an das Bediengerät 4. Alternativ geschieht es, indem der Koordinationsserver 6 nach Empfang der Maschinenadresse 62 vom Bediengerät 4 in einer Antwort dem Bediengerät 4 den Gerätenamen übermittelt. Dazu ist im Koordinationsserver 6 der Gerätename der Maschinenadresse 62 zugeordnet abgespeichert. Der Gerätename ist typischerweise eine für den Benutzer verständliche Bezeichnung der Getränkezubereitungsmaschine 1, beispielsweise eine Angabe über ihren Standort ("Zimmer 1303" oder "Hotel - Lobby" oder "Peter's Maschine"). Der Gerätename und seine Zuordnung wird bei einer Einrichtung der Getränkezubereitungsmaschine 1 definiert und in der Getränkezubereitungsmaschine 1 und/oder Koordinationsserver 6 gespeichert.

Indem das Bediengerät 4 den Gerätenamen kennt, kann dieser am Bediengerät 4 in verständlicher Form angezeigt und zum erneuten Senden eines User-Rezepts 61 oder zum erneuten Herstellen eines Gesamtproduktes dem Benutzer zur Auswahl angeboten werden. Alternativ kann auch die Maschinenadresse 62 angezeigt und zur Auswahl der Getränkezubereitungsmaschine 1 angeboten werden. In beiden Fällen kann entsprechend der Auswahl das Bediengerät 4 die Übermittlung des User-Rezepts 61 und der Maschinenadresse 62 (und gegebenenfalls des Gerätenamens) an den Koordinationsserver 6 vornehmen, ohne dass vorher die Maschinenadresse 62 dem Bediengerät 4 noch einmal übermittelt werden muss.

Um dabei zu verhindern, dass das Bediengerät 4 der Getränkezubereitungsmaschine 1 User-Rezepte 61 übermittelt obwohl der Benutzer sich schon lange nicht mehr im Bereich der Getränkezubereitungsmaschine 1 befindet, kann das Verfahren dazu eingerichtet sein, solche Übermittlungen nach einem bestimmten Zeitintervall zu verhindern ("Benutzungs-Zeitintervall"). Dieses Zeitintervall kann ein oder mehrere Stunden oder Tage oder länger sein. Es kann mit der Übertragung der Maschinenadresse 62 an das Bediengerät 4 beginnen. Eine Überprüfung, ob das Zeitintervall für das Bediengerät 4 abgelaufen ist, kann im Koordinationsserver 6 stattfinden.

Um dabei zu verhindern, dass von mehreren Bediengeräten 4 User-Rezepte 61 an die Getränkezubereitungsmaschine 1 übermittelt werden, können User-Rezepte 61 nur von jenem Bediengerät 4 akzeptiert werden, dessen Bediengerätidentifikator zuletzt (im Koordinationsserver 6) der Maschinenadresse 62 zugeordnet wurde (und die Zuordnung abgespeichert wurde).

Die Kommunikation zwischen Bediengerät 4 und Koordinationsserver 6 sowie zwischen Getränkezubereitungsmaschine 1 und Koordinationsserver 6 geschieht über bekannte Kommunikationssysteme und -Protokolle, beispielsweise TCP/IP. Dazu können in Bediengerät 4 und Getränkezubereitungsmaschine 1 Netzwerkadressen oder URLs, unter denen der Koordinationsserver 6 erreichbar ist gespeichert sein.

Allgemein gilt, dass die verschiedenen Übermittlungen von Informationen zwischen Bediengerät 4, Koordinationsserver 6 und Getränkezubereitungsmaschine 1 unter Verwendung verschiedener Kommunikationsverfahren mit oder ohne Verwendung von kryptographischen Verfahren über ein öffentliches Kommunikationsnetzwerk 5 wie dem Internet geschehen können.

## Patentansprüche

1. Verfahren zur Übermittlung eines Datensatzes von einem Bediengerät (4) an eine Getränkezubereitungsmaschine (1), wobei das Verfahren mindestens die folgenden Schritte aufweist:
• durch das **Bediengerät** (4): Erfassen einer Eingabe oder einer Auswahl, welche den Datensatz spezifiziert;
• durch das **Bediengerät** (4): Erfassen einer Wahl einer Betriebsart zum indirekten Senden des Datensatzes an eine Getränkezubereitungsmaschine (1), insbesondere als Auswahl unter mehreren Betriebsarten durch einen Benutzer des Bediengerätes (4);
• durch die **Getränkezubereitungsmaschine** (1): Erfassen eines durch den Benutzer ausgelösten Steuerbefehls;
• durch die **Getränkezubereitungsmaschine** (1), ausgelöst durch den Steuerbefehl: Übermittlung einer Maschinenadresse (62) der Getränkezubereitungsmaschine (1) an das Bediengerät (4);
• durch das **Bediengerät** (4): Empfang der Maschinenadresse (62);
• durch das **Bediengerät** (4): Übermittlung des Datensatzes und der Maschinenadresse (62) an einen Koordinationsserver (6);
• durch den **Koordinationsserver** (6): Empfangen der Maschinenadresse (62) und des Datensatzes;
• durch den **Koordinationsserver** (6): Speichern der Maschinenadresse (62) und, dieser zugeordnet, des Datensatzes;
• durch den **Koordinationsserver** (6): Übermittlung dieses Datensatzes an die Getränkezubereitungsmaschine (1), insbesondere unter Verwendung der Maschinenadresse;
• durch die **Getränkezubereitungsmaschine** (1): Empfang des Datensatzes vom Koordinationsserver (6);
• durch die **Getränkezubereitungsmaschine** (1): Speichern des Datensatzes und/oder Ausführen einer Aktion nach Massgabe des Datensatzes.

2. Verfahren gemäss Anspruch 1, wobei der Datensatz ein User-Rezept (61) definiert, und ein User-Rezept (61) eine Menge von anpassbaren Zubereitungsparametern aufweist, welche eine Zubereitungsvorschrift zur Herstellung eines Gesamtproduktes durch die Getränkezubereitungsmaschine (1) definieren oder modifizieren, insbesondere wobei die von der Getränkezubereitungsmaschine (1) ausgeführte Aktion das Herstellen eines Gesamtproduktes gemäss dem User-Rezept (61) ist.

3. Verfahren gemäss einem der vorangegangen Ansprüche, wobei zur Übermittlung des Datensatzes durch den **Koordinationsserver** (6) an die Getränkezubereitungsmaschine (1) die folgenden Schritte ausgeführt werden:
• durch die **Getränkezubereitungsmaschine** (1): Meldung an den Koordinationsserver (6), unter Übermittlung der Maschinenadresse (62) an den Koordinationsserver (6), dass die Getränkezubereitungsmaschine (1) zum Empfang eines Datensatzes bereit ist;
• durch den **Koordinationsserver** (6): Empfangen der Meldung;
• durch den **Koordinationsserver** (6): falls oder sobald im Koordinationsserver (6) ein der Maschinenadresse (62) zugeordneter Datensatz gespeichert ist, Übermittlung dieses Datensatzes an die Getränkezubereitungsmaschine (1).

4. Verfahren gemäss einem der vorangegangen Ansprüche, aufweisend den Schritt:
• durch das **Bediengerät** (4): Anzeige einer Benutzeranweisung, welche den Benutzer zur Eingabe von Steuerbefehlen an der Getränkezubereitungsmaschine (1) auffordert.

5. Verfahren gemäss einem der Ansprüche 1 bis 4, wobei die Übermittlung der Maschinenadresse (62) der Getränkezubereitungsmaschine (1) an das Bediengerät (4) über eine nur im Nahbereich wirkende Kommunikation geschieht oder über einen optischen Kommunikationskanal geschieht.

6. Verfahren gemäss Anspruch 5, wobei die Kommunikation über den optischen Kommunikationskanal die Schritte aufweist:
• durch die **Getränkezubereitungsmaschine** (1): Darstellen einer Zeichenkette auf einer Anzeige der Getränkezubereitungsmaschine (1) und Erfassen einer manuellen Eingabe dieses Codes am Bediengerät (4).

7. Verfahren gemäss Anspruch 5, wobei die Kommunikation über den optischen Kommunikationskanal die Schritte aufweist:
• durch die **Getränkezubereitungsmaschine** (1): Senden eines optischen Codes;
• durch das **Bediengerät** (4): optisches Erfassen und Decodieren dieses optischen Codes;
wobei insbesondere der optische Code durch eine räumliche oder zeitliche Variation von abgestrahltem Licht dargestellt wird.

8. Verfahren gemäss einem der vorangegangen Ansprüche, wobei das Verfahren, nach dem Empfang des Datensatzes, als weiteren Schritt aufweist:
• durch die **Getränkezubereitungsmaschine** (1): Anzeige des Datensatzes.

9. Verfahren gemäss einem der vorangegangen Ansprüche, wobei das Verfahren als weiteren Schritt aufweist:
• durch den **Koordinationsserver** (6): Nach Ablauf eines Zeitintervalls ("Speicher-Zeitintervall") nach dem Speichern des Datensatzes, Löschen des gespeicherten Datensatzes und seiner Zuordnung zur Maschinenadresse (62).

10. Verfahren gemäss einem der vorangegangen Ansprüche, wobei das Verfahren als weitere Schritte aufweist:
• durch das **Bediengerät** (4): Empfang eines Gerätenamens, welcher die Getränkezubereitungsmaschine (1) identifiziert, wobei insbesondere
∘ entweder der Gerätename dem Bediengerät (4) von der Getränkezubereitungsmaschine (1) übermittelt wird, insbesondere zusammen mit der Übermittlung der Maschinenadresse (62) an das Bediengerät (4),
o oder der Gerätename dem Bediengerät (4) vom Koordinationsserver (6) übermittelt wird, insbesondere nach Empfang der Maschinenadresse (62) vom Bediengerät (4);
• durch das **Bediengerät** (4): Anzeige des Gerätenamens zur Auswahl durch den Benutzer, vor dem späteren Senden eines weiteren Datensatzes.

11. Verfahren gemäss einem der vorangegangen Ansprüche, wobei das Verfahren als weitere Schritte aufweist:
• durch das **Bediengerät** (4): Übermitteln, zusammen mit dem Datensatz und der Maschinenadresse (62), eines **Bediengerätidentifikators** an den Koordinationsserver (6);
• durch den **Koordinationsserver** (6): Speichern des Bediengerätidentifikators unter Zuordnung zur Maschinenadresse (62).

12. Verfahren zum Betrieb eines Bediengerätes (4) zur Übermittlung eines Datensatzes vom Bediengerät (4) an eine Getränkezubereitungsmaschine (1), wobei das Verfahren mindestens die folgenden auf dem Bediengerät (4) ausgeführten Schritte aufweist:
• Erfassen einer Eingabe oder Auswahl, welche den Datensatz spezifiziert ;
• Erfassen einer Wahl einer Betriebsart zum indirekten Senden des Datensatzes an eine Getränkezubereitungsmaschine (1), insbesondere als Auswahl unter mehreren Betriebsarten durch einen Benutzer des Bediengerätes (4);;
• Empfang einer Maschinenadresse (62);
• Übermittlung des Datensatzes und der Maschinenadresse (62) an einen Koordinationsserver (6).

13. **Computerprogramm** zum Betrieb eines Bediengerätes (4) zur Übermittlung eines Datensatzes vom Bediengerät (4) an eine Getränkezubereitungsmaschine (1), wobei das Computerprogramm bei Ausführung auf dem Bediengerät (4) das Verfahren gemäss Anspruch 12 ausführt.

14. Verfahren zum Betrieb einer Getränkezubereitungsmaschine (1) zur Übermittlung eines Datensatzes von einem Bediengerät (4) an die Getränkezubereitungsmaschine (1), wobei das Verfahren mindestens die folgenden auf der Getränkezubereitungsmaschine (1) ausgeführten Schritte aufweist:
• Erfassen eines durch einen Benutzer ausgelösten Steuerbefehls;
• ausgelöst durch den Steuerbefehl: Übermittlung einer Maschinenadresse (62) der Getränkezubereitungsmaschine (1) an das Bediengerät (4);
• Optional: Meldung an einen Koordinationsserver (6), unter Übermittlung der Maschinenadresse (62) an den Koordinationsserver (6), dass die Getränkezubereitungsmaschine (1) zum Empfang eines Datensatzes bereit ist;
• Empfang eines Datensatzes vom Koordinationsserver (6);
• Speichern des Datensatzes und/oder Ausführen einer Aktion nach Massgabe des Datensatzes.

15. **Getränkezubereitungsmaschine** (1), ausgebildet zur Ausführung des Verfahrens gemäss Anspruch 14.

## Claims

1. A method for transmitting a data set from an operating device (4) to a drinks preparation machine (1), wherein the method comprises at least the following steps:
• by the **operating device** (4): registering an input or a selection, which specifies the data set;
• by the **operating device** (4): registering a selection of an operating mode for indirectly sending the data set to a drinks preparation machine (1), in particular as a selection amongst several operating modes by a user of the operating device (4);
• by the **drinks preparation machine** (1): registering a control command which is triggered by the user;
• by the **drinks preparation machine** (1), triggered by the control command: transmitting a machine address (62) of the drinks preparation machine to the operating device (4);
• by the **operating device** (4): receiving the machine address (62);
• by the **operating device** (4): transmitting the data set and the machine address (62) to a coordination server (6):
• by the **coordination server** (6): receiving the machine address (62) and the data set:
• by the **coordination server** (6): storing the machine address (62) and, assigned thereto, the data set;
• by the **coordination server** (6): transmitting this data set to the drinks preparation machine (1), in particular including using the machine address;
• by the **drinks preparation machine** (1): receiving the data set from the coordination server (6);
• by the **drinks preparation machine** (1): storing the data set and/or executing an action according to the data set.

2. A method according to claim 1, wherein the data set defines a user recipe (61), and a user recipe (61) comprises a quantity of adjustable preparation parameters which define or modify a preparation prescript for producing a total product by the drinks preparation machine (1), in particular wherein the action which is carried out by the drinks preparation machine (1) is the production of a total product according to the user recipe (61).

3. A method according to one of the preceding claims, wherein the following steps are carried out for transmitting the data set to the drinks preparation machine (1) by the coordination server (6):
• by the **drinks preparation machine:** notification of the coordination server (6), including transmission of the machine address (62) to the coordination server (6), that the drinks preparation machine (1) is ready for receiving a data set;
• by the **coordination server** (6): receiving the notification;
• by the **coordination server (6):** if or as soon as a data set which is assigned to the machine address (62) is stored in the coordination server (6), transmitting this data set to the drinks preparation machine (1).

4. A method according to one of the preceding claims, comprising the step:
• by the **operating device (4):** displaying a user instruction which requests the user to input control commands at the drinks preparation machine (1).

5. A method according to one of the claims 1 to 4, wherein the transmission of the machine address (62) of the drinks preparation machine (1) to the operating device (4) is effected via a communication which only acts in the near range or via an optical communication channel.

6. A method according to claim 5, wherein the communication via the optical communication channel comprises the steps:
• by the **drinks preparation machine (1):** representing a character string on a display of the drinks preparation machine (1) and registering a manual input of this code at the operating device (4).

7. A method according to claim 5, wherein the communication via the optical communication channel comprises the steps:
• by the **drinks preparation machine** (1): sending an optical code;
• by the **operating device** (4) : optically registering and decoding this optical code;
wherein in particular the optical code is represented by a spatial or temporal variation of emitted light.

8. A method according to one of the preceding claims, wherein the method, after receiving the data set, comprises as a further step:
• by the **drinks preparation machine (1):** displaying the data set.

9. A method according to one of the preceding claims, wherein the method as a further step comprises:
• by the **coordination server** (6): after completion of a time interval ("storage time interval") after storing the data set, deleting the stored data set and its assignment to the machine address (62).

10. A method according to one of the preceding claims, wherein the method comprises as further steps:
• by the **operating device** (4): receiving a device name which identifies the drinks preparation machine (1), wherein in particular
∘ either the device name is transmitted to the operating device (4) by the drinks preparation machine (1), in particular together with the transmission of the machine address (62) to the operating device (4);
∘ or the device name is transmitted to the operating device (4) by the coordination server (6), in particular after receiving the machine address (62) from the operating device (4);
• by the **operating device** (4): displaying the device name for the selection by the user, before the later sending of a further data set.

11. A method according to one of the preceding claims, wherein the method comprises as further steps:
• by the **operating device** (4): transmitting, together with the data set and the machine address (62), an **operating device identifier** to the coordination server (6);
• by the **coordination server** (6): storing the operating device identifier including an assignment to the machine address (62).

12. A method for operating an operating device (4) for transmitting a data set from the operating device (4) to a drinks preparation machine (1), wherein the method comprises at least the following steps which are carried out on the operating device (4);
• registering an input or a selection, which specifies the data set;
• registering a selection of an operating mode for indirectly sending the data set to a drinks preparation machine (1), in particular as a selection amongst several operating modes by a user of the operating device (4);
• receiving a machine address (62);
• transmitting the data set and the machine address (62) to a coordination server (6).

13. A **computer program** for operating an operating device (4) for transmitting a data set from the operating device (4) to a drinks preparation machine (1), wherein on execution on the operating device (4), the computer program carries out the method according to claim 12.

14. A method for operating a drinks preparation machine (1) for transmitting a data set from the operating device (4) to the drinks preparation machine (1), wherein the method comprises at least the following steps which are carried out on the drinks preparation machine (1):
• registering a control command which is triggered by a user;
• triggered by the control command: transmitting a machine address (62) of the drinks preparation machine (1) to the operating device (4);
• optionally: notification of a coordination server (6), including transmission of the machine address (62) to the coordination server (6), that the drinks preparation machine (1) is ready for receiving a data set;
• receiving a data set from the coordination server (6);
• storing the data set and/or carrying out an action according to the data set.

15. A **drinks preparation machine** (1), designed for carrying out the method according to claim 14.

## Revendications

1. Procédé de transmission d'un ensemble de données d'un dispositif de contrôle (4) à un machine de préparation des boissons (1), dans lequelle le procédé comprend au moins les étapes suivantes :
• par le **dispositif de contrôle** (4) : enregistrement d'une entrée ou d'une sélection, qui spécifie l'ensemble de données ;
• par le **dispositif de commande** (4) : enregistrement d'une sélection d'un mode de fonctionnement pour l'envoi indirect de l'ensemble de données à un machine de préparation des boissons (1), en particulier en tant que sélection parmi plusieurs modes de fonctionnement par un utilisateur du dispositif de commande (4) ;
• par le **machine de préparation des boissons** (1) : enregistrement d'une commande déclenchée par l'utilisateur ;
• par la **machine de préparation de boissons** (1), déclenchée par la commande de contrôle : transmission d'une adresse de machine (62) de la machine de préparation de boissons au dispositif de commande (4) ;
• par le **dispositif de contrôle** (4) : réception de l'adresse de la machine (62) ;
• par le **dispositif de contrôle** (4) : transmission de l'ensemble des données et de l'adresse de la machine (62) à un serveur de coordination (6) :
• par le **serveur de coordination** (6) : réception de l'adresse de la machine (62) et de l'ensemble de données :
• par le **serveur de coordination** (6) : enregistrement de l'adresse de la machine (62) et de l'ensemble de données qui lui est associé ;
• par le **serveur de coordination** (6) : transmission de cet ensemble de données au machine de préparation des boissons (1), en particulier en utilisant l'adresse de la machine ;
• par le **machine de préparation des boissons** (1) : réception de l'ensemble de données provenant du serveur de coordination (6) ;
• **par la machine de préparation de boissons** (1) : enregistrement de l'ensemble de données et/ou exécuter une action en fonction de l'ensemble de données.

2. Procédé selon la revendication 1, dans lequel l'ensemble de données définit une recette d'utilisateur (61), et une recette d'utilisateur (61) comprend une quantité de paramètres de préparation réglables qui définissent ou modifient une prescription de préparation pour la production d'un produit total par la machine de préparation de boissons (1), en particulier dans lequel l'action qui est effectuée par la machine de préparation de boissons (1) est la production d'un produit total selon la recette d'utilisateur (61).

3. Procédé selon l'une des revendications précédentes, dans lequel les étapes suivantes sont effectuées pour transmettre l'ensemble de données au machine de préparation des boissons (1) par le **serveur de coordination** (6) :
• par le machine de préparation des boissons (1): notification au serveur de coordination (6), y compris la transmission de l'adresse de la machine (62) au serveur de coordination (6), que le machine de préparation des boissons (1) est prêt à recevoir un ensemble de données ;
• par le **serveur de coordination** (6) : réception de la notification ;
• par le **serveur de coordination (6) :** si ou dès qu'un ensemble de données attribué à l'adresse de la machine (62) est enregistré dans le serveur de coordination (6), transmission de cet ensemble de données au machine de préparation des boissons (1).

4. Procédé selon l'une des revendications précédentes, comprenant l'étape :
• par le **dispositif de contrôle (4) :** affichage d'une instruction utilisateur demandant à l'utilisateur d'introduire des commandes de contrôle au niveau de la machine de préparation de boissons (1).

5. Procédé selon l'une des revendications 1 à 4, dans lequel la transmission de l'adresse de la machine (62) du machine de préparation des boissons (1) au dispositif de commande (4) se fait par une communication qui n'agit qu'à courte distance ou par un canal de communication optique.

6. Procédé selon la revendication 5, dans lequelle la communication via le canal de communication optique comprend les étapes suivantes :
• par le **machine de préparation des boissons** (1) : représentation d'une chaîne de caractères sur un écran du machine de préparation des boissons (1) et enregistrement d'une entrée manuelle de ce code sur le dispositif de commande (4).

7. Procédé selon la revendication 5, dans lequelle la communication via le canal de communication optique comprend les étapes suivantes :
• par le **machine de préparation des boissons** (1) : transmission d'un code optique ;
• par le **dispositif de contrôle** (4) : réception optique et décodage de ce code optique ;
en particulier, le code optique est représenté par une variation spatiale ou temporelle de la lumière émise.

8. Procédé selon l'une des revendications précédentes, dans lequel le procédé, après réception de l'ensemble de données, comprend une étape supplémentaire :
• par le **machine de préparation des boissons (1)** : affichage de l'ensemble des données.

9. Procédé selon l'une des revendications précédentes, dans lequel le procédé comprend une étape supplémentaire :
• par le **serveur de coordination** (6) : après expiration d'un intervalle de temps ("intervalle de temps d'enregistrement ") après l'enregistrement de l'ensemble de données, effacer de l'ensemble de données enregistré et de son association à l'adresse de la machine (62).

10. Pocédé selon l'une des revendications précédentes, dans lequelle le procédé comprend des étapes supplémentaires :
• par le **dispositif de contrôle** (4) : réception d'un nom de dispositif qui identifie le machine de préparation des boissons (1), dans lequel en particulier
∘ soit le nom du dispositif est transmis au dispositif de contrôle (4) par le machine de préparation des boissons (1), en particulier en même temps que la transmission de l'adresse de la machine (62) au dispositif de contrôle (4) ;
∘ soit le nom du dispositif est transmis au dispositif de contrôle (4) par le serveur de coordination (6), en particulier après avoir reçu l'adresse de la machine (62) du dispositif de contrôle (4) ;
• par le **dispositif de contrôle** (4) : affichage du nom de l'appareil pour sélection par l'utilisateur, avant l'envoi ultérieur d'un autre ensemble de données.

11. Procédé selon l'une des revendications précédentes, dans lequelle le procédé comprend des étapes supplémentaires :
- par le **dispositif de contrôle** (4) : transmission au serveur de coordination (6), en même temps que l'ensemble de données et l'adresse de la machine (62), d'un **identificateur de dispositif de contrôle** ;
• par le **serveur de coordination** (6) : enregistrement de l'identificateur du dispositif de contrôle, y compris une association à l'adresse de la machine (62).

12. Procédé d'utilisation d'un dispositif de contrôle (4) pour transmettre un ensemble de données du dispositif de contrôle (4) à une machine de préparation de boissons (1), dans lequel le procédé comprend au moins les étapes suivantes qui sont effectuées sur le dispositif de contrôle (4) ;
• l'enregistrement d'une entrée ou d'une sélection, qui spécifie l'ensemble de données ;
• enregistrer une sélection d'un mode de fonctionnement pour envoyer indirectement l'ensemble de données à un machine de préparation des boissons (1), en particulier en tant que sélection parmi plusieurs modes de fonctionnement par un utilisateur du dispositif de fonctionnement (4) ;
• réception d'une adresse de machine (62) ;
• transmission l'ensemble de données et l'adresse de la machine (62) à un serveur de coordination (6).

13. **Programme** d' **ordinateur** pour l'exploitation d'un dispositif de contrôle (4) pour la transmission d'un ensemble de données du dispositif de contrôle (4) à une machine de préparation de boissons (1), dans lequel, lors de l'exécution sur le dispositif de contrôle (4), le programme d'ordinateur met en oeuvre le procédé selon la revendication 12.

14. Procédé d'exploitation d'une machine de préparation de boissons (1) pour transmettre un ensemble de données du dispositif de contrôle (4) à la machine de préparation de boissons (1), dans lequelle le procédé comprend au moins les étapes suivantes qui sont exécutées sur la machine de préparation de boissons (1) :
• l'enregistrement d'une commande de contrôle déclenchée par un utilisateur ;
• déclenchée par l'ordre de commande : transmission d'une adresse de machine (62) du machine de préparation des boissons (1) au dispositif de commande (4) ;
• optionnel : notification à un serveur de coordination (6), y compris la transmission de l'adresse de la machine (62) au serveur de coordination (6), que le machine de préparation des boissons (1) est prêt à recevoir un ensemble de données ;
• recevoir un ensemble de données du serveur de coordination (6) ;
• enregistrement de l'ensemble de données et/ou exécuter une action en fonction de l'ensemble de données.

15. **Machine de préparation de boissons** (1), configurée pour exécuter le procédé selon la revendication 14.
